(19) **Europäisches Patentamt / European Patent Office / Office européen des brevets**

(11) **EP 1 800 546 A1**

(12) # EUROPEAN PATENT APPLICATION
published in accordance with Art. 158(3) EPC

(43) Date of publication:
**27.06.2007 Bulletin 2007/26**

(51) Int Cl.:
**A23K 1/18** (2006.01)  **C11D 9/02** (2006.01)
**C07C 31/22** (2006.01)

(21) Application number: **05799720.7**

(22) Date of filing: **21.09.2005**

(86) International application number:
**PCT/ES2005/070131**

(87) International publication number:
**WO 2006/035099 (06.04.2006 Gazette 2006/14)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **22.09.2004 ES 200402263**

(71) Applicant: **Norel, S.A.**
**28007 Madrid (ES)**

(72) Inventor: **PABLOS P REZ, Enrique**
**E-28007 Madrid (ES)**

(74) Representative: **Diez de Rivera de Elzaburu, Alfonso et al**
**González-Bueno & Illescas**
**Alfonso XI, 7-2 Izo**
**28014 Madrid (ES)**

(54) **METHOD OF PRODUCING CALCIUM, SODIUM OR MAGNESIUM SOAPS FROM FATTY ACIDS OR OLEINS FROM ANIMAL OR VEGETABLE FATS AND USE THEREOF AS NUTRIENTS IN MONOGASTRIC ANIMAL FEED**

(57)    Procedure for producing calcium, sodium or magnesium fatty acid soaps or vegetable or animal soapstocks and their use as nutrients in monogastric animal feeds. This procedure makes it possible to add glycerol, glycerol plus emulsifier or emulsifier to soaps, and simplifying the process by making the addition in the same production process. The use of these soaps in monogastric animals, such as pigs and fowl, decreases feeding costs compared to the use of whole fats (triglycerides) commonly used in the nutrition of monogastrics. The soaps are obtained in powder or granular form which is an advantage as regards currently giving it in liquid form.

EP 1 800 546 A1

**Description**

TECHNICAL FIELD

The present invention refers to animal feed, specifically to the preparation of fodder with fats and their use in animal feeds. More specifically, the present invention describes a procedure for the production of calcium, sodium or magnesium fatty acid soaps or vegetable or animal soapstocks to be used as nutrients in monogastric animal feeds.

BACKGROUND OF THE INVENTION

Fats have several nutritional and not strictly nutritional advantages, which makes them suitable for use in fodder. Among the not strictly nutritional uses, are: they control powder formation and improve palatability, consumption, the structure and form of the fodder and moreover, lubricates machinery which improves its performance and useful life. From a nutritional point of view, fats have advantages, such as: they increase the energy content of the fodder, reduce calorie stress and, due to its lower heat increment, improve the energy efficiency per kcal of metabolisable energy.

The key criterion to evaluate a fat is its net energy content. This value basically depends on its gross energy and its intestinal digestibility, which basically depends on its solubilisation capacity and micelle formation in the intestine. Due to the particular digestive characteristics of ruminants (supplementary fat affects the microorganisms in their rumen, and hydrogenates and saturates free fatty acids in the rumen by hydrolysing triglycerides), fat absorption is different to that of monogastric animals, therefore the assessment of the same fat for animal feed will be different depending on whether it is going be used for ruminant or monogastric feeds.

As well as the net energy content, other important criteria when considering the inclusion of a fat in fodder are its availability and price compared to other energy sources. Bearing these criteria in mind, there is growing interest in animal fats, obtained by processing fats from natural sources for use in feeds. Due to their lower price, among those of note are the by-products of different industries where the raw material is fat and in particular, soapstocks (residues of refined edible fats), lecithins, fried fats, distillates from glycerol production, and others.

In the context of using fats derived from their natural forms, the use of so-called soaps, molecules without glycerol where the fatty acids are saponified, usually by calcium, sodium or magnesium cations, has been extended to animal feeds. Their use has been extended to ruminant feeds in particular. When they are used in monogastric feeds, for economic reasons or ease of use, the results are worse than those obtained with the use of triglycerides, mostly in whole fats, on lacking glycerol, which is considered vital for the formation of micelles, which are only required for good digestibility of the fats by these monogastric animals.

Taking this background into account, the main objective of this invention consists of modifying the process for obtaining these soaps in a way that they can be used in animal feeds in proportions that might improve the production costs of monogastric animal species. This objective is achieved by means of the addition of glycerol and/or emulsifiers, accepted for use in animal feeds by European or international legislation, in the production process of the aforementioned soaps, in proportions that make the use of triglycerides in monogastric animals cheaper and effective.

Thus the use of glycerol, in a variable range that can and must be lower than that contained in triglycerides, added or not to other emulsifiers, will make digestibility easier and improve animal production costs.

SUMMARY OF THE INVENTION

The invention describes a procedure for producing calcium, sodium, or magnesium fatty acid soaps present in vegetable or animal soapstocks or in other fats and their use as nutrients in animal feeds. It consists of incorporating into the aforementioned soaps, glycerol, glycerol plus emulsifier or emulsifier only, already widely used in ruminant feeds, with the aim of extending the use of the described soaps to other, monogastric farm animals, for example pigs and fowl. One advantage is that the aforementioned incorporation is carried out in the same soap production process and most importantly is that the results of the products obtained rival, energy-wise, whole fats (triglycerides), commonly employed in monogastric nutrition, which leads to improved costs in nutrition, at the same time provided in an easily supplied powder or granular form, which has clear advantages over adding fats in the liquid form known in the state of the technique.

DETAILED DESCRIPTION OF THE INVENTION.

The present invention describes a procedure for producing calcium, sodium, or magnesium fatty acid soaps or vegetable or animal soapstocks to which is added a component, glycerol, alone or with emulsifiers in proportions that make them cheaper due to the cost and efficiency of the use of triglycerides in monogastric animals. This compound, glycerol, is bound to fatty acids in molecules, the majority of which are generally in fats of natural origin, triglycerides, while it is lower in the proportion of starting fats used here, the proportion of free fatty acids being much higher that they can give rise to the production of soaps.

The use of glycerol, in a variable range that can and must be less than that contained in triglycerides, adding or not adding emulsifiers, will lead to better digestibility and improve farm animal costs.

One advantage of the present invention is that the addition of glycerol, alone or with authorised emulsifiers, is carried out in the production process of the aforementioned soaps, without added cost or expense to the known procedure.

Another advantage of the present invention is that the products obtained can be competitive, due to their nutritional efficiency, with whole fats commonly used in the nutrition of monogastric animals, which leads to improved costs in nutrition as their use lowers costs.

An additional advantage of the invention is that the products obtained can be supplied in powder or granular form, which is an easier supply form compared to the currently used liquid forms.

In a first aspect, the invention refers to a discontinuous procedure, which can be automated, improved by preparing mixtures that contain glycerol and/or emulsifiers and alkaline or alkaline earth salts elements and saturated or unsaturated fatty acids, which includes the following steps:

(1) heat a fat or a source rich in fatty acids acceptable for animal feed to a temperature that is at least slightly higher than the solidifying temperature of the aforementioned fat;

(2) proceed to add glycerol or an emulsifying agent or combination of the same;

(3) add, or simultaneously with the addition of the glycerol and/or other emulsifying agent, or after that addition, a source of alkaline or alkaline earth ions, which can be an oxide, hydroxide or a salt of the same or one of their mixtures;

(4) homogenise the mixture;

(5) add water;

(6) allow to stand for sufficient time for the fatty acids to saponify;

(7) evaporate the water until almost dry.

In a preferred realisation of the invention, the evaporation of the water is produced either in a container different from the reaction container or over another surface or on a conveyor belt, preferably in a tray, over which the contents of the reaction container are unloaded before there is complete saponification. The aforementioned tray or chosen support, are preferably at ambient (room) temperature and the reaction mixture remains in it until the reaction is completed and when the water has evaporated, until there is a residual content between 2% and 5%.

In this way, a dry and powdery product is obtained, which is cooled and is eventually milled in case there are lumps. Once this product is obtained, it can easily be used for animal feeds as it is, or mixed with any fodder.

An advantage of this discontinuous application option of the invention procedure is that the loading and unloading from the reaction container itself, as well as from the tray where the reaction batch is unloaded so that it continues reacting, can be automated, thus achieving an easy to control, very low cost automated production.

The reaction container is preferably provided with a stirrer and open to the atmosphere. The stirring speed is in the range of 1000 to 5000 rpm.

The amount of water to add will differ according to conditions, depending on factors such as the amount of free fatty acids or the cation source used, but to be able to guarantee the reaction, it will normally vary between 11.5% and 23.5%.

The temperature to which the fat or fatty acid source is heated will be at least higher than the solidifying temperature of the aforementioned fat, in such a way that it may saponify, so that the normal working range is between 45°C and 100°C. The temperature will, preferably, be such that the fat is in viscous liquid form, capable of being pumped and stirred, without having required an excessive energy cost to heat it up, therefore temperatures in the range of 60°C to 85°C are preferred.

The glycerol and/or other emulsifier can be added simultaneously along with the alkaline or alkaline earth ion source compound or before the addition of this compound. It is preferred that the addition of glycerol and/or emulsifying agent is simultaneous with the alkaline or alkaline earth ion source compound as the process may be faster. In any case, the glycerol and/or other emulsifier must be added before adding water, so that the glycerol is already present at the time of saponification and remains homogeneously distributed and incorporated. In this way, a perfect mixture with the oily fraction is obtained in the shortest time.

Glycerol is a by-product obtained from triglyceride refining, which may or may not be subjected to further refining to produce glycerine. In the procedure of this invention the use of unrefined glycerol is preferred. The glycerol proportion will vary depending on the amount of free fatty acids present in the source fat and whether there is an optional emulsifier present, but will vary between 4% and 12%.

The emulsifier may be any of these present in Table 1, which shows a list approved by the European Union for use in animal feed. The proportion to add in each case will vary according to criteria, which includes their emulsifying ability and cost.

**Table 1.- Emulsifying, stabilising, thickening and gelling agents authorised by the European Union**

| CE No. | Additive | Chemical formula, descr. | Animal species or animal category | Maximum age | Minimum content | Max. content | Other stipulations | End of authoris. period |
|---|---|---|---|---|---|---|---|---|
| | | | | | mg/kg of whore fodder | | | |
| E-322 | Lecithins | - | All animal species or animal categories | - | - | - | All Feeds | No time limit |
| E-400 | Alginic acid | - | All animal species or animal categories | - | - | - | All feeds | No time limit |
| E-401 | Sodium alginate | - | All animal species or animal categories | - | - | - | All feeds | No time limit |
| E-402 | Potassium alginate | - | All animal species or animal categories | - | - | - | All feeds | No time limit |
| E-403 | Ammonium alginate | - | All animal species or animal categories except aquarium fish | - | - | - | All feeds | No time limit |
| E.404 | Calcium Alginate | - | All animal species or animal categories | - | - | - | All feeds | No time limit |
| E-405 | 1,2-propanodial alginate (propylene glycol alginate) | - | All animal species or animal categories | - | - | - | All feeds | No time limit |

| CE No. | Additive | Chemical formula, descr. | Animal species or animal category | Maximum age | Minimum content | Max. content | Other stipulations | End of authoris. period |
|--------|----------|--------------------------|-----------------------------------|-------------|-----------------|--------------|--------------------|-------------------------|
|        |          |                          |                                   |             | mg/kg of whore fodder | |        |                         |
| E-406 | Agar | - | All animal species or animal categories | - | - | - | All feeds | No time limit |
| E-407 | Carrageenan | - | All animal species or animal categories | - | - | - | All feeds | No time limit |
| E-410 | Garrofin gum (carob gum) | - | All animal species or animal categories | - | - | - | All feeds | No time limit |
| E-411 | Tamarind seed flour | - | All animal species or animal categories | - | - | - | All feeds | No time limit |
| E-412 | Guar gum | - | All animal species or animal categories | - | - | - | All feeds | No time limit |
| E-413 | Traganth | - | All animal species or animal categories | - | - | - | All feeds | No time limit |
| E-414 | Acacia (gum arabic) | - | All animal species or animal categories | - | - | - | All feeds | No time limit |

(continued)

| CE No. | Additive | Chemical formula, descr. | Animal species or animal category | Maximum age | Minimum content | Max. content | Other stipulations | End of authoris. period |
|--------|----------|--------------------------|-----------------------------------|-------------|-----------------|--------------|--------------------|--------------------------|
| | | | | | mg/kg of whore fodder | | | |
| E-415 | Xanthan gum | - | All animal species or animal categories | - | - | - | All feeds | No time limit |
| E-418 | Gellan gum | Polytetrasaccharide that contains glucose, glucoronic acid, rhamnose (2:1:1) produced by Pseudomonas elodea (ATCC31466) | Dogs<br><br>Cats | - | - | - | Feeds with a moisture content greater than 20% | No time limit |
| E-420 | Sorbitol | - | All animal species or animal categories except aquarium fish | - | - | - | All feeds | No time limit |
| E-421 | Mannitol | - | All animal species or animal Categories | - | - | - | All feeds | No time limit |
| E-422 | Glycerol | - | All animal species or animal categories | - | - | - | All feeds | No time limit |
| E432 | Polyoxyethylene sorbitan monolaurate (polysorbate 20) | - | All animal species or animal categories | - | - | 5000 (alone or jointly with other polysorbates) | Only in milk substitutes | No time limit |

(continued)

| CE No. | Additive | Chemical formula, descr. | Animal species or animal category | Maximum age | Minimum content | Max. content | Other stipulations | End of authoris. period |
|---|---|---|---|---|---|---|---|---|
| | | | | | mg/kg of whore fodder | | | |
| E433 | Polyoxyethylene sorbitan monooleate (polysorbate 80) | - | All animal species or animal categories | - | - | 5000 (alone or jointly with other polysorbates) | Only in milk substitutes | No time limit |
| E-434 | Polyoxyethylene sorbitan monopalmitate (polysorbate 40) | - | All animal species or animal categories | - | - | 5000 (alone or jointly with other polysorbates) | Only in milk substitutes | No time limit |
| E-435 | Polyoxyethylene sorbitan monostearate (polysorbate 60 | - | All animal species or animal categories | - | - | 5000 (alone or jointly with other polysorbates | Only in milk substitutes | No time limit |
| E436 | Polyoxyethylene (20) sorbitan tristearate | - | All animal species or animal categories | - | - | 5000 (alone or jointly with other polysorbates | Only in milk substitutes | No time limit |
| E-440 | Pectins | - | All animal species or animal categories | - | - | - | All feeds | No time limit |
| E-450b(i) | Pentasodium tri phosphate | - | Dogs Cats | - | - | 5000 5000 | All feeds | No time limit |
| E-460 | Microcrystalline cellulose | - | All animal species or animal categories except aquarium fish | - | - | - | All feeds | No time limit |

| CE No. | Additive | Chemical formula, descr. | Animal species or animal category | Maximum age | Minimum content | Max. content | Other stipulations | End of authoris. period |
|--------|----------|--------------------------|-----------------------------------|-------------|-----------------|--------------|--------------------|-------------------------|
| | | | | | mg/kg of whore fodder | | | |
| E-460 (ii) | Powdered cellulose | - | All animal species or animal categories | - | - | - | All feeds | No time limit |
| E-461 | Methyl cellulose | - | All animal species or animal categories | - | - | - | All feeds | No time limit |
| E-462 | Ethyl cellulose | - | All animal species or animal categories | - | - | - | All feeds | No time limit |
| E-463 | Hydroxypropyl cellulose | - | All animal species or animal categories | - | - | - | All feeds | No time limit |
| E-464 | Hydroxypropyl methyl cellulose | - | All animal species or animal categories | - | - | - | All feeds | No time limit |
| E-465 | Ethyl methyl cellulose | | All animal species or animal categories | - | - | - | All feeds | No time limit |
| E-466 | Carboxy methyl cellulose (Sodium carboxy methyl cellulose) | - | All animal species or animal categories | - | - | - | All feeds | No time limit |

EP 1 800 546 A1

(continued)

| CE No. | Additive | Chemical formula, descr. | Animal species or animal category | Maximum age | Minimum content | Max. content | Other stipulations | End of authoris. period |
|--------|----------|--------------------------|-----------------------------------|-------------|-----------------|--------------|--------------------|-------------------------|
| | | | | | mg/kg of whore fodder | | | |
| E-470 | Sodium, potassium and calcium salts of fatty acids alone or mixed, obtained from edible fats or distilled nutrient fatty acids | - | All animal species or animal categories | - | - | - | All feeds | No time limit |
| E-471 | Mono- and diglycerides of fatty acids | - | | - | - | - | All feeds | No time limit |
| E-472 | Mono- and diglycerides of nutrient fatty acids esterified with the following acids: a) acetic b) lactic c) citric d) tartaric e) Mono- and diacetyl tartaric | - | - | - | - | - | All feeds | No time limit |
| E-473 | Sucrose esters of fatty acids (saccharose and nutrient fatty acid esters) | - | All animal species or animal categories | - | - | - | All feeds | No time limit |
| E-474 | Sucroglycerides (mixture of saccharose and mono- and diglyceride of nutrient fatty acids) | - | All animal species or animal categories | - | - | - | All feeds | No time limit |

| CE No. | Additive | Chemical formula, descr. | Animal species or animal category | Maximum age | Minimum content | Max. content | Other stipulations | End of authoris. period |
|---|---|---|---|---|---|---|---|---|
| | | | | | mg/kg of whore fodder | | | |
| E-475 | Polyglycerol esters of non-polymerised nutrient fatty acids | - | All animal species or animal categories | - | - | - | All feeds | No time limit |
| E-477 | Propane-1,2-diol esters of fatty acids (propylene glycol) and nutrient fatty acids, alone or mixed with diesters | - | All animal species or animal categories | - | - | - | All feeds | No time limit |
| E-480 | Stearoyl-2-lactylate acid | - | All animal species or animal categories | - | - | - | All feeds | No time limit |
| E-481 | Sodium stearoyl-2-lactylate | - | All animal species or animal categories | - | - | - | All feeds | No time limit |
| E-482 | Calcium stearoyl-2-lactylate | - | All animal species or animal categories | - | - | - | All feeds | No time limit |
| E483 | Stearyl tartrate | - | Ail animal species or animal categories | - | - | - | All feeds | No time limit |
| E-484 | polyethylene glycol ricinoleate | - | All animal species or animal categories | - | - | - | All feeds | No time limit |
| E-488 | Dextrans | - | | - | - | - | All feeds | No time limit |

(continued)

| CE No. | Additive | Chemical formula, descr. | Animal species or animal category | Maximum age | Minimum content | Max. content | Other stipulations | End of authoris. period |
|---|---|---|---|---|---|---|---|---|
| | | | | | mg/kg of whore fodder | | | |
| E-487 | Polyethlene glycol ester of soya oil fatty acidd | - | Calves | - | - | - | All feeds | No time limit |
| E-488 | Suet fatty acid polyethylated glycerides | - | calves | - | - | - | All feeds | No time limit |
| E-489 | Polyglycerol ether and alcohols obtained by oleic and palmitic acid reduction. | - | Calves | - | - | 5000 | Only in milk substitutes | No time limit |
| E-490 | 1,2-propanodiol | - | Weaning calves<br>Fattening cattle<br>Calves<br>Lambs<br>Goat kids<br>Pigs<br>Free range fowl | - | - | 12000<br>36000<br>36000<br>36000<br>36000<br>36000<br>36000 | All feeds<br>All feeds<br>All feeds<br>All feeds<br>All feeds<br>All feeds<br>All feeds | No time limit<br>No time limit<br>No time limit<br>No time limit<br>No time limit<br>No time limit<br>No time limit |
| E-491 | Sorbitan monostearate | - | All animal species or animal categories | - | - | - | All feeds | No time limit |
| E-492 | Sorbitan tristearate | - | All animal species or animal categories | - | - | - | All feeds | No time limit |
| E-493 | Sorbitan monolaurate | - | All animal species or animal categories | - | - | - | All feeds | No time limit |

| CE No. | Additive | Chemical formula, descr. | Animal species or animal category | Maximum age | Minimum content | Max. content | Other stipulations | End of authoris. period |
|---|---|---|---|---|---|---|---|---|
| | | | | | mg/kg of whore fodder | | | |
| E-494 | Sorbitan monooleate | - | All animal species or animal categories | - | - | - | All feeds | No time limit |
| E-495 | Sorbitan monopalmitate | - | All animal species or animal categories | - | - | - | All feeds | No time limit |
| E-496 | Polyethylene Glycol 6000 | - | All animal species or animal categories | - | - | 300 | All feeds | No time limit |
| E-497 | Polyoxypropylene-polyoxyethylene polymers (PM 6800 - 9000) | - | All animal species or animal categories | - | - | 50 | All feeds | No time limit |
| E-498 | polyglycerol esters of Polycondensed ricin fatty acids | - | Dogs | - | - | - | All feeds | No time limit |
| E-499 | Cassia gum | - | Dogs Cats | - | - | 17600 17600 | Feeds with a moisture content greater than 20% Feeds with a moisture content greater than 20% | No time limit No time limit |

The soaps obtained will preferably be calcium, sodium or magnesium soaps. To obtain them, the compounds preferred as a cation source are CaO, NaOH and MgO or combinations of the same. These compounds are added in a stoichiometric or slightly higher quantity to that required, so that all, or almost all, of the free fatty acids present in the fat used form salts.

Calcium oxide (lime) is a basic oxide that is preferentially used as it costs less than magnesium oxide and caustic soda. The source of calcium oxide is mainly burnt limestone which contains around 96 % in weight of CaO and around 4 % of other oxides. Similarly, the source of MgO is calcined magnesite and the source of caustic soda is NaOH. It is within the scope of the invention to use a mixture of calcium oxide and magnesium oxide in any proportion. The preferable size of the CaO and/or MgO particles is from 30 to 120 micrometres.

Raw materials

The starting fat that can be used in the invention procedure will be any suitable for animal feed that contains mainly free saturated and/or unsaturated fatty acids with 14 to 20 carbon atoms. The fatty acids commonly found in the domestic animal diet are shown in Table 2:

**Table 2.-** Fatty acids commonly found in the domestic animal diet.

| Name | Structure | Abbrev,(*) | Melting point |
|---|---|---|---|
| (Saturated) | | | |
| Myristic | $CH_3\text{-}(CH_2)_{12}\text{-}COOH$ | (C14:O) | 54 |
| Palmitic | $CH_3\text{-}(CH_2)_{14}\text{-}COOH$ | (C16:O) | 63 |
| Stearic | $CH_3\text{-}(CH_2)_{16}\text{-}COOH$ | (C18:O) | 70 |
| Palmitoleic | $CH_3\text{-}(CH_2)_5\text{-}CH=CH\text{-}(CH_2)_7\text{-}COOH$ | (C16:1) | 61 |
| Oleic | $CH_3\text{-}(CH_2)_7\text{-}CH=CH\text{-}(CH_2)_7\text{-}COOH$ | (C18:1) | 13 |
| (Unsaturated) | | | |
| Linoleic | $CH_3\text{-}(CH_2)\text{-}CH=CH\text{-}CH_2\text{-}CH=CH\text{-}(CH_2)_7\text{-}COOH$ | (C18:2) | -5 |
| Linolenic | $CH_3\text{-}CH_2\text{-}CH=CH\text{-}CH_2\text{-}CH=CH\text{-}CH_2\text{-}CH=CH\text{-}(CH_2)\text{-}COOH$ | (C18:3) | -11 |
| * The first number indicates the total number of carbon atoms and the second one the number of double bonds in the molecule. | | | |

In general, the most important fatty acids found in fats of natural origin are those shown in Table 3:

**Table 3.-** The most important fatty acids in fats of natural origin

| N° of C | Saturated Acid | Unsaturated Acid | Unsaturated acid formula |
|---|---|---|---|
| 4 | Butyric | | - |
| 6 | Capronic | | - |
| 8 | Caprylic | | - |
| 10 | Caprinic | Caproleic | $CH_2=CH\text{-}(CH_2)_7\text{-}COOH$ |
| 12 | Lauric | Laurenic | $CH_3\text{-}CH_2\text{-}CH=CH\text{-}(CH_2)_7\text{-}COOH$ |
| 14 | Myristic | Myristoleic | $CH_3\text{-}(CH_2)_3\text{-}CH=CH\text{-}(CH_2)_7\text{-}COOH$ |
| 16 | Palmitic | Palmitoleic | $CH_3\text{-}(CH_2)_5\text{-}CH=CH\text{-}(CH_2)_7\text{-}COOH$ |
| 18 | Stearic | Oleic | $CH_3\text{-}(CH_2)_7\text{-}CH=CH\text{-}(CH_2)_7\text{-}COOH$ |
| 18 | - | Linoleic | $CH_3\text{-}(CH_2)_4\text{-}(CH=CH\text{-}CH_2)_2(CH_2)_5\text{-}COOH$ |
| 18 | - | Linolenic | $CH_3\text{-}(CH_2\text{-}CH=CH)_3\text{-}(CH_2)_7\text{-}COOH$ |
| 18 | - | Eleostearic | $CH_3\text{-}(CH_2)_3\text{-}(CH=CH)_3\text{-}(CH_2)_7\text{-}COOH$ |
| 20 | Arachic | Arachidonic | $CH_3\text{-}(CH_2)_4\text{-}(CH=CH\text{-}CH_2)_4\text{-}(CH2)_2\text{-}COOH$ |
| 22 | Behenic | Erucic | $CH_3\text{-}(CH_2)_7\text{-}CH=CH\text{-}(CH_2)_{11}\text{-}COOH$ |

Among the fats of vegetable origin that can be used, cottonseed, soya, sunflower, rapeseed, corn, olive, palm, coconut, palm kernel, linseed and peanut oil, soya lecithins refined from residues or any of these or their mixtures used in the industry, can be mentioned. These fats contain from around 5% by weight to around 42,5% by weight of palmitic acid; from trace amounts to less than 1% by weight of palmitoleic acid; from around 2 % by weight to around 5 % by weight of stearic acid; from around 7% by weight to 80% by weight of oleic acid; from around 1 % by weight to 62% by weight of linoleic acid, and from trace amounts to around 51% (in linseed oil) of linoleic acid.

Among the fats of animal origin that could be used in the procedure of the invention are suet and lard, which contain around 25% of palmitic acid and 40% oleic acid by weight. As regards stearic acid in these two sources, the percentages are around 20% for suet and around 15% for lard.

In a preferred realisation of the invention the raw material used as a source of fatty acids is a soapstock derived from palm oil refining known as "palm fatty acid distillate" internationally know by its acronym PFAD. This commercial product is obtained industrially by vacuum distilling the fatty acids present in natural palm oil. This soapstock is preferred as it is cheap and accessible and for its good ability to be adapted to the procedure of the invention, among other reasons, as it generally contains a higher percentage of free fatty acids than other soapstocks, 90-95% PFAD compared to the usual 50-60%. Tables 4 and 5 give details of its usual composition, as well as the different physicochemical parameters it exhibits,

**Table 4**

| CONSTITUENT | CONTENTS |
|---|---|
| Free fatty acids | 65 - 95% by weight |
| Triglycerides | 5 35% by weight |
| Water | < 5% by weight |
| Unsaponifiable | < 3% by weight |
| Palmitic Acid | 37-46.5 % by weight |
| Oleic Acid | 36 - 43 % by weight |
| Linoleic Acid | 7.5- 10.5 % by weight |
| Stearic Acid | 2.5 - 5.5 by weight |
| Lauric, myristic, linoleic Acids | Trace amounts |

**Table 5**

| PARAMETER | VALUE |
|---|---|
| Iodine Index | 51 - 55 |
| Melting Point, °C | 45-47 |
| Peroxide content | < 10-12 meq $O_2$/Kg |

The melting point of this soapstock is between 40°C - 41°C, therefore, to work with it, the correct temperature would be at least above 45°C, approximately 70°C being preferable to work with.

Calcium soaps of fatty acids mixed with glycerol are prepared from this soapstock according to the procedure of the invention to include them in fodder. Productive yield tests will be carried out with these fodders on monogastric animals where these fodders have been included in their diet, against control monogastric animals. The comparison tests described below in the corresponding examples show that the products of the invention not only can be used as a substitute for other sources without a loss in yield, but also, in some cases, an increase in growth in the animals can even be observed.

COMPARITIVE PRODUCTIVE YIELD TESTS

**Example 1.** *Effect on the productive yields and quality of the carcass of broiler chickens by including soap with fatty acids distilled from palm oil (SCa) and soap with fatty acids distilled from palm oil with glycerol (SCa + G) in fowl fodder.*

Objective

To determine the effect of including PFAD with glycerol calcium soaps in the diet compared with including PFAD calcium soaps on the productive parameters (average daily consumption, daily weight and conversion index) and the carcass quality of broiler chickens.

Material and Methods

Experimental Animals

A total of 390 Ross male chickens were used, housed according to the experimental treatment.

Experiment Design

Designed to randomise 2 treatments based on 2 feeding schedules according to the fat source (Table 6). In the 0 to 21 day diet (0-21 d) 2 fat sources were used: PFAD calcium soap and PFAD calcium soap + glycerol. Each treatment was replicated 5 times and each replicate was made up of 39 chickens housed in the same pen.

Table 6. Experimental treatments.

| Treatment | Fat Source | AME* kcal/kg | AME* kcal/kg |
|---|---|---|---|
| 1 | SCa | 2.975 | 3.050 |
| 2 | SCa + glycerol | 2.975 | 3.050 |

* AME: Apparent Metabolisable Energy

| | | | |
|---|---|---|---|
| Number of treatments: | 2 | Broilers per replicate: | 39 |
| Replicates per treatment: | 5 | Broilers per treatment: | 195 |
| Total replicates: | 10 | Total broilers : | 390 |

Experimental Diets

The experimental diets were formulated according to the FEDNA raw materials composition tables (1999). All the diets covered or exceeded the USA National Research Council (NRC, 1994) requirements for broilers of this age, All the animals were kept on an *ad libitum* experimental diet, that is, with free access to food at all times, so they ate as much as they wanted. The diets were in granular form. The quantitative composition and calculated analysis of the experimental diets are shown in Table 7, where, besides the apparent metabolisable energy (AME), the ether extract values (EE), crude protein (CP), available lysine (AL), the available joint methionine-cysteine value (Meth+Cys availability), total phosphorous (P) and available phosphorous (available P), can be observed. The experimental feeds were analysed to determine, moisture, ash content, crude protein (CP), ether extract (after acid hydrolysis) (CF) and crude fibre (CFi), which gave the results presented in Table 8.

**Table 7.** Experimental diet.

| | 0-21 d | | 21-42 d | |
|---|---|---|---|---|
| Raw Material | T1 | T2 | T1 | T2 |
| Corn | 10.5 | 10.5 | 22.6 | 22.6 |
| Barley | 16.0 | 16.0 | 6,8 | 6.8 |
| Wheat | 30.0 | 30.0 | 30.0 | 30.0 |
| Soya flour 47.5 | 34.6 | 34.6 | 31.6 | 31.6 |
| Soya oil | 1.0 | 1.0 | 1.0 | 1.0 |

(continued)

| Raw Material | 0-21 d | | 21-42 d | |
|---|---|---|---|---|
| | T1 | T2 | T1 | T2 |
| Calcium Soap | 5.1 | . | 5.4 | |
| Mod. Calcium Soap | | 5.1 | | 5.4 |
| Salt | 0.37 | 0.37 | 0.38 | 0.38 |
| Phosphate | 1.50 | 1.50 | 1.46 | 1.46 |
| DL-Methionine | 0.27 | 0.27 | 0.25 | 0.25 |
| L-Lysine | 0.10 | 0.10 | 0.05 | 0.05 |
| Corrector | 0.50 | 0.50 | 0.50 | 0.50 |
| **Nutrients** | **T7** | **T8** | **T7** | **T8** |
| AME | 2975 | 2975 | 3050 | 3050 |
| EE | 7.0 | 7.0 | 7.4 | 7.4 |
| CP | 22.6 | 22.6 | 21.0 | 21.0 |
| Avail. lysine | 1.16 | 1.16 | 1.03 | 1.03 |
| Avail. Meth+Cys | 0.88 | 0.88 | 0.82 | 0.82 |
| Ash | 5.5 | 5.5 | 5.3 | 5.3 |
| Ca | 0.95 | 0.95 | 0.95 | 0.95 |
| P | 0.68 | 0.68 | 0.66 | 0.66 |
| Avail. P | 0.42 | 0.42 | 0.40 | 0.40 |
| Na | 0.16 | 0.16 | 0.16 | 0.16 |

[1]Analysis calculated according to the FEDNA raw materials composition tables (1999).

**Table 8.** Chemical analysis of the experimental diets

| Trtmnt. | Moisture (%) | CP (%) | CF (%) | CFI (%) | Ash (%) | Finos (%) | Durability (%) |
|---|---|---|---|---|---|---|---|
| **1 Prestart** | 10.10 | 22.00 | 730 | 3.65 | 5.15 | 1.6 | 99.1 |
| **2 Start** | 10.25 | 22.45 | 6,75 | 3.85 | 5.25 | 3,0 | 98.6 |
| **1 Fattening** | 11.10 | 21.35 | 805 | 3.25 | 5.15 | 0.4 | 98.8 |
| **2 Fattening** | 11.15 | 21.45 | 695 | 3.00 | 5.10 | 0.5 | 98.8 |

The analysis of the feed, did not show any differences that might affect the results.

Controls:

Productive parameters and death per replicate (mean daily gain, mean daily consumption and conversion index) at 21 and 42 days.

Statistical analysis of the data

The data were analysed using the SAS GLM procedure version 6.12 (SAS Institute, 1990) for random designs. The initial weight as covariable and the diet were included in the model for analysing the productive parameters.

**Results**

Significant differences and trends were observed between 0 and 21 days of life. The animals that consumed SCa + glycerol, grew more than those who only consumed SCa as a fat source. This higher growth was associated with a significant increase in consumption, which led to a slight drop in the conversion index.

No significant differences were seen for any of the productive parameters during the fattening phase, from 21 to 42 days. A general numerical improvement, in weight gain, consumption and conversion index was observed when they consumed the SCa + glycerol diet.

There were no differences between treatments, over the total period, but the higher growth and consumption was maintained.

The results are presented in Tables 9, 10, 11, and show the live weight on days 0 (LW0), 21 (LW21), and 42 (LW42), the mean daily consumption (MDC), mean daily gain (MDG), the conversion index (CI) and the coefficient of variation, and pointing out the probability where there are differences using Pr > F values. Significant differences (P<.05) between pairs of values are indicated by letters (a, b) next to these values, while "x" and "e" next to a pair of values indicates a trend (*P*<.1).

Table 9. *Productive results: Period 0-21 d.*

| Trtmnt | Males | LW0 (g) | LW21 (g) | MDC (g) | MDG (g) | CI |
|---|---|---|---|---|---|---|
| 1 | SCa | 42.34 | 841.3 **y** | 52.68 **b** | 38.03 | 1.385 |
| 2 | SCa + glycerol | 42.95 | 878.6 **x** | 54.95 **a** | 39.81 | 1.380 |
| | CV | 1.64 | 2.67 | 2.50 | 2.80 | 2.07 |
| Pr> F | LW at 0 d | - | 0.0281 | 0.0061 | 0.0323 | 0.3130 |
| | Trtmnt | 0.2038 | **0.0539** | **0.0472** | **0.0538** | 0.8036 |

Table 10. *Productive results: Period* **21-42** *d.*

| Trtmnt | Males | LW0 (g) | LW21 (g) | MDC (g) | MDG (g) | CI |
|---|---|---|---|---|---|---|
| 1 | SCa | 841.3 **y** | 2901 | 183.0 | 97.21 | 1.883 |
| 2 | SCa + glycerol | 878.6 **x** | 2952 | 185.5 | 99,63 | 1.862 |
| | CV | | 2.42 | 2.02 | 3.43 | 1.70 |
| Pr > F | LW at 21 d | 0.0281 | 0.0885 | 0.0728 | 0.6111 | 0.1991 |
| | Trtmnt | **0.0539** | 0.4688 | 0.4869 | 0.4687 | 0.4947 |

Table 11. *Productive results: Period 0-42 d*

| Trtmnt | Males | LW0 (g) | LW21 (g) | MDC (g) | MDG (g) |
|---|---|---|---|---|---|
| 1 | SCa | 42.34 | 117.6 **y** | 67.93 | 1.731 |
| 2 | SCa + glycerol | 42.95 | 120.2 **x** | 69.41 | 1.731 |
| | CV | 1.03 | 1.54 | 2.30 | 1.11 |
| Pr > F | LW at 0 d | - | 0.0078 | 0.0780 | 0.4274 |
| | Trtmnt | 0.2038 | **0.0807** | 0.2259 | 0.9767 |

**Example 2** *Effect of including soap with fatty acids distilled from palm oil (SCa) + glycerol on the productivity of recently weaned piglets.*

**Objective**

To determine the effect of including SCa + glycerol as a replacement for soya oil on the productive parameters (mean daily gain, mean daily consumption and conversion index) of recently weaned piglets.

**Materials and Methods**

Experimental Animals

A total of 84 weaned 28 day old piglets (Duroc x Landrace*Large White), with an initial mean weight of 8.4 ±1.0 kg, were used. The piglets were grouped taking into account the initial live weight. At the beginning all the animals were individually crimped.

Experimental design

The design randomised 2 treatments (Table 12), based including two fat sources (soya oil and SCa + glycerol). For the analysis of the productive parameters and faecal digestibility, each treatment was replicates 6 times and each experimental unit was made up of 7 piglets (50% males and 50% females) housed together. The study was divided into two periods: prestarter: from 28 to 41 days old, and starter: from 41 to 61 days old.
Start of the study: 11 th March 2004
End of the study: 13th April 2004

**Table 12.** Experimental treatments.

| T1 | Soya oil | - |
|---|---|---|
| T2 | - | PFAD calcium soap + Glycerol (SCa + Glycerol) |

| | | | |
|---|---|---|---|
| Number of treatments: | 2 | Piglets per replicate: | 7 |
| Replicates per treatment: | 6 | Piglets per treatment: | 42 |
| Total number of replicates: | 12 | Total number of piglets: | 84 |

Experimental diets

The experimental diets (Table 13) were designed according to the FEDNA raw materials composition tables (2003). The diets contained 0.5% diatomaceous earth as an indigestible marker for calculating the faecal digestibility of the ether extract. The diets were formulated to be isonutritive, according to NRC requirements (1998) for piglets of this age. The diets were presented in granules and provided *ad libitum* throughout the experiment.

**Table 13.** calculated composition and analysis of the experimental diets.

| Nutrients, % | Prestarter: 28-41 | | Starter: 41-61 | |
|---|---|---|---|---|
| | T1 | T2 | T1 | T2 |
| Barley | 5.50 | 5.50 | 19.27 | 20.50 |
| Corn | 29.00 | 29.00 | 28.19 | 27.00 |
| Soft wheat | 25.00 | 25.00 | 25.00 | 25.00 |
| Potato protein | 11.70 | 11.70 | 8.50 | 8.50 |
| Soya flour, 47% | 9.00 | 9.20 | 11.00 | 11.00 |
| Sweet whey powder (cattle) | 12.80 | 12.80 | - | - |
| Soya oil | 2.30 | - | 3.00 | - |
| PFAD calcium soap + glycerol | - | 3.00 | - | 4.00 |
| L-lysine 50% | 0.47 | 0.47 | 0.69 | 0.71 |
| L-threonine | 0.05 | 0.05 | 0.14 | 0.14 |
| OH-methionine | 0.18 | 0.18 | 0.18 | 0.18 |
| Calcium carbonate | 0.80 | 0.00 | 1.09 | 0.00 |
| Di-calcium Phosphate | 1.27 | 1.29 | 1.39 | 1.42 |
| Sodium chloride | 0.21 | 0.21 | 0.45 | 0.45 |
| Choline-75 | 0.08 | 0.10 | 0.10 | 0.10 |
| Vitamin-mineral adjuster[1] | 0.40 | 0.40 | 0.40 | 0.40 |
| Acidifier | 0.60 | 0.60 | 0.60 | 0.60 |
| Diatomaceous earth | 0.50 | 0.50 | - | - |
| **Calculated analysis[2]** | | | | |
| Energy, Kcal/kg | 2390 | 2390 | 2410 | 2410 |
| Crude protein,% | 21.0 | 21.0 | 19.6 | 19.5 |
| Ether extract,% | 4.4 | 4.4 | 5.0 | 5.2 |
| Crude Fibre (CFi) % | 2.3 | 2.1 | 3.1 | 2.8 |
| Neutral Detergent Fibre (NDF) % | 7.8 | 7.4 | 10.4 | 10 |
| Starch, % | 35.9 | 36.2 | 42.1 | 42.5 |

(continued)

**Calculated analysis[2]**

| Lactose, % | 9.0 | 9.0 | - | - |
|---|---|---|---|---|
| Calcium,% | 0.78 | 0.80 | 0.83 | 0.85 |
| Total phosphorous, % | 0.59 | 0.59 | 0.58 | 0.58 |
| Avail. phosphorous % | 0.42 | 0.42 | 0.37 | 0.37 |
| Sodium % | 0.18 | 0.18 | 0.18 | 0.18 |
| Avail. lysine % | 1.30 | 1.30 | 1.24 | 1.24 |
| Avail. Meth + Cyst % | 0.78 | 0.78 | 0.72 | 0.72 |
| Avail. Threonine % | 0.81 | 0.81 | 0.77 | 0.77 |
| Avail. Tryptophan % | 0.20 | 0.20 | 0.18 | 0.18 |

[1] Provided per kilogram of diet: 12,500 UI vit A; 1,800 UI vit $D_3$; 40.0 mg vit E; 1.5 mg vit $K_3$, 5.0 mg vit $B_2$; 2.5 mg vit $B_6$; 25.0 $\mu$g vit $B_{12}$; 30 mg nicotinic acid; 15.0 mg pantothenic acid; 0.5 mg folic acid; 1.3 mg de vit $B_1$; 1.0 mg iodine; 100 mg iron; 45 mg manganese; 0.3 mg selenium; 120 mg zinc; 0.1 mg cobalt; 160 mg copper.
[2] Based on FEDNA values (2003).

The calculated fatty acid composition in the different diets is shown in Table 14.

**Table 14.** [1]Calculated fatty acid composition of the experimental diets.

| Fatty acids, % | Age 28 - 41 d | | Age 41-61 d | |
|---|---|---|---|---|
| | T1 | T2 | T1 | T2 |
| C<14 | 0.02 | 0.07 | 0.00 | 0.07 |
| C16:0 | 0.51 | 1.81 | 0.57 | 2.32 |
| C18:0 | 0.13 | 0.21 | 0.14 | 0.25 |
| C18:1 | 0.85 | 1.35 | 0.96 | 1.67 |
| C18:2 | 2.07 | 1.12 | 2.42 | 1.24 |
| C18:3 | 0.24 | 0.07 | 0.29 | 0.07 |
| C>20 | 0.09 | >0.01 | 0.11 | 0.00 |

[1]Based on FEDNA values (2003).

Before preparing the diets representative samples were taken of the calcium soaps used in the trial and the fatty acid profile was analysed[1] following the method used by Soares and López-Bote (2002). The results are shown in Table 15.

**Table 15.** Chemical analysis of the fat sources.

| | PFAD calcium soap + glycerol |
|---|---|
| **%** | **QUANTITATIVE ANALYSIS** |
| Crude fats | 73.8 |
| Calcium | 10.9 |
| Dry material | 92.7 |
| Ash | 11.5 |
| Glycerol | 6.1 |
| **%** | **FATTY ACID PROFILE** |
| Lauric acid C12:0 | 1.7 |
| Myristic acid C14:0 | 2.0 |
| Palmitic acid C16:0 | 51.3 |
| Stearic acid C18-0 | 5.4 |
| Oleic acid C18:1 | 32.9 |
| Linoleic acid C18:2 | 6.8 |

[1]Norel, S.A. Ctra. Pla Santa Maria, km 2,5. Poligono Industrial de Valls. 43800 Valls. Tarragona

Before starting the study the following were analysed[2]: moisture, ash, crude protein (Kjeldahl), ether extract (Soxhlet after acid hydrolysis), crude fibre (Weende), starch and calcium content in the experimental feeds. The chemical analysis is shown in Table 16.

**Table 16.** Chemical analysis of the experimental diets.

| Nutrients | Prestarter (Age 28-41 d) | | Starter (Age 41-61 d) | |
| --- | --- | --- | --- | --- |
| | T1 | T2 | T1 | T2 |
| Dry material | 89.0 | 88.5 | 88.0 | 88.2 |
| Crude protein | 20.8 | 20.0 | 19.1 | 19.2 |
| Crude fibre | 2.6 | 2.3 | 4.0 | 3.4 |
| Ether extract | 4.2 | 3.2 | 4.4 | 2.9 |
| Starch | 39.3 | 41.1 | 43.9 | 41.0 |
| Ash | 5.3 | 4.6 | 4.4 | 4.4 |
| Calcium | 0.88 | 0.78 | 0.66 | 0.75 |

[2] Laboratorio de Mouriscade: 36515 Vilanova - Lalin, Pontevedra, Responsable: Maria Hermida.

Analysis and measurements

Before starting the study:

- Chemical analysis of the feeds (dry material, protein, ether extract, starch, calcium and fatty acid profile).

The following parameters were recorded during the study:

- Animal weights and feed consumption of the same at days 28, 41, and 61 to calculate yields (growth, consumption and conversion index) for each period and overall.
- At the end of the prestarter period (41 d old), samples of faeces were taken from different piglets from each replicate which were later mixed to obtain a uniform and homogeneous sample and then to carry out faecal digestibility analysis. The samples were packed in a labelled container which was hermetically sealed. The faecal digestibility calculations are detailed below.

Faecal digestibility of the ether extract

The faecal digestibility of the fatty acids to 41 days old was calculated by the insoluble in acid ash method described by Vogtmann *et al.* (1975). Given that the marker (diatomaceous earth) is indigestible, it is taken that, for the marker:
Ingested = excreted

Marker ingestion:   $[M]_p \times I$
Marker excretion:   $[M]_e \times E$

Where:

$[M]_p$:   concentration of the marker in the feed
I:       ingested
$[M]_e$:   concentration of the marker in the faeces
E:       excreted

$$[M]_p \times I = [M]_e \times E \qquad E = \frac{[M]_p}{[M]_e} \times I \qquad \text{[Formula 1]}$$

The digestibility of the nutrient X will be:

$$X \text{ Digestibility} = \frac{I \times [X]_p - E \times [X]_e}{I \times [X]_p} \quad \textit{[Formula 2]}$$

With:

$[X]_p$:  concentration of nutrient X ingested in the feed

I:  ingested

$[X]_e$:  concentration of nutrient X in the faeces

E:  excreted

On substituting the value of E (Formula 1) in Formula 2:

$$X \text{ Digestibility} = \frac{I \times [X]_f - \dfrac{[M]_p}{[M]_e} \times I \times [X]_e}{I \times [X]_p}$$

$$X \text{ Digestibility} = \frac{[X]_f - \dfrac{[M]_p}{[M]_e} \times [X]_e}{[X]_p} = 1 - \frac{[M]_p \times [X]_e}{[M]_e \times [X]_p}$$

$$X \text{ Digestibility} = 1 - \frac{[X]_e / [M]_e}{[X]_p / [M]_p}$$

The fatty acids were analysed according to the methods used by Soares and López-Bote (2002).

Statistical analysis of the data

The data were analysed using the SAS GLM version 6.12. (SAS Institute) procedure, for designs with random clusters. The data are presented as corrected least squares means. The model included the percentage of males per replicate, the cluster (pen) and treatment as main variables, and the initial weight was included as a covariable. The mortality was analysed by the SAS CATMOD procedure.

**Results**

The weights of the animals at the beginning of the study (28 days old) and at the end of the prestarter period (41 days old) and starter period (61 days old) are shown in Table 17. The animal weights progressed similarly but there were no significant differences between treatments throughout the experimental period. But there was a tendency for the live weight at 42 days of life to be higher in animals who consumed **SCa + glycerol.**

**Table 17.** Effect of using vegetable fats on live weight (28-61 days old).

| Treatment | 28 | Age in days 41 | 61 |
|---|---|---|---|
| T-1 | 8.4 | 11.6[y] | 19.6 |
| T-2 | 8.3 | 12[x] | 19.6 |
| SEM[1] | - | 0.1 | 0.3 |

(continued)

| Treatment | 28 | Age in days 41 | 61 |
|---|---|---|---|
| p[2] | - | **0.0869** | 0.9245 |

[1] Standard Error of the Mean (N= 6).

[2] Significance: different letters in he same column indicate tendency (*P*<.1).

The effects of vegetable fat soaps on the productive parameters are shown in Table 18. There were significant differences between treatments for the consumption and a numeric improvement in weight gain in the prestarter period. No differences were seen in the starter period. The animals with SCa with glycerol had the same result as those who consumed soya oil.

**Table 18.** Effect of fat sources on the mean daily gain (MDG), mean daily consumption (MDC) and the conversion index (CI) in the prestarter and starter period.

| | Prestarter 28-41 d old | | | Starter 41-61 d old | | |
|---|---|---|---|---|---|---|
| Treatment | MDG (g/d) | MDC (g/d) | CI (g/g) | MDG (g/d) | MDC (g/d) | CI (g/g) |
| T-1 | 253 | 274[b] | 1.09 | 398 | 604 | 1.52 |
| T-2 | 276 | 312[a] | 1.14 | 388 | 609 | 1.57 |
| SEM[1] | 11 | 8 | 0.04 | 13 | 18 | 0.03 |
| P[2] | 0.17 | **0.0055** | 0.42 | 0.64 | 0.87 | 0.30 |

[1] Standard Error of the Mean (N= 6).

[2] Significance: different letters in the same column indicate significant differences (P<0.05).

The effects of the different treatments on the productive parameters of the animals for the whole period of the study (28-61 days old) are shown in Table 19. No significant differences were seen in weight gain, mean daily consumption or the conversion index in the total study period. However, the use of **SCa + glycerol in piglet diets, is an alternative to the consumption of soya oil.**

**Table 19.** Effects of vegetable fat sources on the mean daily gain (MDG), mean daily consumption (MDC) and conversion index (CI) for the overall period (28-61 d).

| Treatment | MDG (g/d) | 28-61 d old MDC (g/d) | CI (g/g) |
|---|---|---|---|
| T-1 | 346 | 474 | 1.37 |
| T-2 | 345 | 492 | 1.43 |
| SEM[1] | 10 | 12 | 0.03 |
| *P* | 0.94 | 0.32 | 0.21 |

[1] SEM= Standard Error of the Mean (N= 6).

The effects of treatment on the faecal digestibility (%) of the fatty acids are shown in Table 20.

**Table 20.** Effects of the fatty acids on the apparent faecal digestibility (%)

| Treatment | C10:0, % | C12:0, % | C14:0, % | C16:0, % | C18:0, % | C18:1, % | C18:2, % | C18:3, % | C20:0, % |
|---|---|---|---|---|---|---|---|---|---|
| T-1 | 18.9[b] | 1.2[b] | 76.5[b] | 7d.4[b] | -21.1[b] | 95.1[b] | 97.2[b] | 94.9[b] | 21.1[b] |
| T-2 | 78,9[a] | 82.4[a] | 87.3[a] | 78.4[a] | 28.7[a] | 97.7[a] | 98,9[a] | 97.8[a] | 55.0[a] |
| EEM[1] | 10.6 | 5.4 | 1.1 | 1.1 | 6.5 | 0.5 | 0.5 | 0.8 | 3.6 |
| P[2] | 0.0032 | 0.0001 | 0.0001 | 0.0269 | 0.0001 | 0.0066 | 0.0513 | 0.0215 | 0,0001 |

[1] SEM= Standard Error of the Mean (N= 6).

[2] Significance level: different letters in the same column indicate significant differences (*P*<.05).

A significant improvement, in absolute values, was observed in the digestibility of all the fatty acids in animals

EP 1 800 546 A1

that ate the diet with PFAD calcium soap + Glycerol. This effect can be partly explained by the capacity of the glycerol molecule to re-esterify free fatty acids and, therefore, it helps in the formation of easily absorbable micelles in the intestine.

## Conclusions

Taking into account the results and experimental conditions in which the study was carried out, we can conclude that:

a) In the overall period of the study (28 to 61 days old) there were no significant differences between treatments for weight gain and consumption. This indicates that the use of palm fatty acid distillate calcium soap with glycerol (SCa + glycerol) can replace soya oil as a fat contribution in the piglet diet, without affecting productive yields.

b) The animals that ate the diet with SCa + glycerol had a higher apparent faecal digestibility of all the fatty acids than soya oil. Therefore, the energy efficiency of PFAD Soap + Glycerol could be higher than that of soya oil, from a nutritional point of view.

c) The use of PFAD calcium soap + glycerol as a vegetable fat source in diets of recently weaned piglets is a good alternative to using soya oil, as it does not adversely affect the productive parameters and improves the fatty acid digestibility of the diet, as well as reducing feeding costs.

## REFERENCES

- AOAC., 2000. Official Methods of Analysis (17th Ed.). Association of Official Analytical Chemists. Arlington, VA, EE.UU.
- FEDNA, 2003. Tablas FEDNA de composición y valor nutritivo de alimentos para la fabricación de piensos compuestos (2a ed.). C. de Blas, P. Garcia, and G.G. Mateos. Ed. Fundación Española para el Desarrollo de la Nutrición Animal. Universidad Politécnica de Madrid. España.
- GCP, 2000. Good Clinical Practice for the Conduct of Clinical Trials or Veterinary Medicinal Products. VICH GL9, June 2000. International Cooperation on Harmonisation of Technical Requirements for Registration of Veterinary Medicinal Products. Brussels, Belgium. http://vich.eudra.org/pdf/2000/G!09_st7.pdf
- NRC, 1194. Nutrient Requirements of Poultry. 9th ed. National Academy Press, Washington DC, EE.UU.
- NRC, 1998. Nutrient Requirements of Swine. 10th rev. Ed. National Academy Press, Washington DC, EE.UU.
- SAS Institute, 1990. SAS® User's Guide: Statistics. SAS Institute, Cary, NC, EE.UU.
- SCAN "Guidelines for the assessment of additives in feeding stuffs" Part II: Enzymes and Micro-organisms, http://europa.eu.int/comm/food/fs/sc/scanlout68_en.pdf)
- Soares, M, López-Bote, 2002. Effects of dietary lecithin and fat unsaturation on nutrient utilisation in weaned piglets. Anim. Feed Sci. Technol. 95: 169-177.
- Vogtmann, H., Pfirter, H.P., Prabucki, A.L. (1975). A new method of determining metabolisability of energy and digestibility of fatty acids in broiler diets. British Poultry Science, 16 (5): 531-534.

## Claims

1. A procedure for preparing mixtures that contain glycerol and/or an emulsifying agent along with saturated or unsaturated fatty acid salts and elements from the alkaline or alkaline earth group that includes the following steps:

a) heat a fat or source rich in fatty acids acceptable for animal feeding to a temperature that is at least slightly higher than its melting temperature;
b) then add glycerol, or optionally an emulsifying agent or combinations of the same;
c) add a source of alkaline or alkaline earth ions selected between an oxide, hydroxide or a salt of the same, or their combinations;
d) homogenise the mixture;
e) add water;
f) allow to stand for sufficient time so that saponification of the fatty acids occurs;
g) evaporate the water until almost dry.

**2.** A procedure according to claim 1, where the fat or source rich in fatty acids acceptable for animal feeding is heated to a temperature in the range of 45°C to 100°C.

**3.** A procedure according to claims 1 and 2, where the process of mixing the components is made at a speed between 1000 and 3000 rpm.

**4.** A procedure according to claims 1 to 3, where the quantity of water added varies between 11.5% and 23.5%.

**5.** A procedure according to claims 1 to 4, where the quantity of glycerol added varies between 4% and 12%.

**6.** A procedure according to claims 1 to 5, where the emulsifying agent that is optionally added is one among any of those permitted by European Legislation for animal feeding.

**7.** A procedure according to claims 1 to 6, where the glycerol and/or emulsifying agent is added at the same time as the alkaline or alkaline earth ion source.

**8.** A procedure according to claims 1 to 7, where the glycerol and/or emulsifying agent is added after the addition of the alkaline or alkaline earth ion source.

**9.** A procedure according to claims 1 to 8, where the evaporation of the water is carried out in a container with a large surface area, different from the mixing container.

**10.** A procedure according to claims 1 to 9, where the product obtained is subjected to an additional grinding process.

**11.** A procedure according to any of the claims 1 to 10, where the alkaline or alkaline earth ion source is added in stoichiometric or slightly higher quantities than that required for the formation of salts of the fatty acids present in the mixture.

**12.** A procedure according to claim 11, where the alkaline or alkaline earth ion source is calcium oxide, magnesium oxide, sodium hydroxide or combinations of the same.

**13.** A procedure according to any of the claims 1 to 11, where the starting fat is selected from cotton oil, sunflower oil, rapeseed oil, linseed oil, peanut oil, suet, lard, a soapstock derived from processing any edible fat, soya lecithin, and mixtures of the same.

**14.** A procedure according to claim 13, where the starting fat is a soapstock derived from palm oil, obtained by vacuum distillation, known as "palm fatty acids distillate".

**15.** A procedure according to claims 12 and 14, where the alkaline or alkaline earth ion source is calcium oxide and the starting fat is "palm fatty acids distillate".

**16.** A fodder for animal feeding **characterised by** having a composition that contains fatty acid salts and alkaline or alkaline earth elements together with an emulsifying agent selected from glycerol and/or any of those permitted by European Legislation for animal feeds.

**17.** A fodder for animal feeding according to claim 16, **characterised** because the only emulsifying agent present is glycerol.

**18.** A fodder for animal feeding according to claim 17, **characterised** because the emulsifying agent present is a combination of glycerol and another emulsifying agent selected from any one of those permitted by European Legislation for animal feeds.

**19.** A fodder for animal feeding according to any of the claims 16 to 18, **characterised by** containing a mixture of fatty acid salts and alkaline or alkaline earth elements selected from calcium, magnesium, sodium or mixtures of the same, together with an emulsifying agent.

**20.** A fodder for animal feeding according to any of the claims 16 to 19, **characterised by** containing salts of alkaline or alkaline earth elements and fatty acids from a starting fat selected from cotton oil, sunflower oil, rapeseed oil, corn oil, olive oil, palm oil, coconut oil, palm kernel oil, linseed oil, peanut oil, suet, lard, a soapstock derived from processing any edible fat, soya lecithin, and mixtures of the same, together with an emulsifying agent.

EP 1 800 546 A1

## INTERNATIONAL SEARCH REPORT

International application No.

PCT/ ES 2005/070131

### A. CLASSIFICATION OF SUBJECT MATTER

*A23K 1/18 (2006.01)    C11D 9/02 (2006.01)   C07C 31/22 (2006.01)*

According to International Patent Classification (IPC) or to both national classification and IPC

### B. FIELDS SEARCHED

Minimum documentation searched (classification system followed by classification symbols)

A23K, C11D, C07C

Documentation searched other than minimum documentation to the extent that such documents are included in the fields searched

Electronic data base consulted during the international search (name of data base and, where practicable, search terms used)

OEPMPAT, EPODOC, WPI, PAJ

### C. DOCUMENTS CONSIDERED TO BE RELEVANT

| Category* | Citation of document, with indication, where appropriate, of the relevant passages | Relevant to claim No. |
|---|---|---|
| A | US 4153735 A (RICHARD P. MOMMER) 08.05.1979, **column 2, line 48, column 4. line 19** | 1-20 |
| A | GB 2349155 A ( THE FEED OIL COMPANY LIMITED) 25.10.2000, **pages 2,3** | 1-20 |
| A | EP 0163395 A (BALFOUR MANUFACTURING COMPANY) 04.12.1985,  **page 3, line 13, page 5, line 25** | 1-20 |
| A | US 6399800 B (MICHAEL J. HAAS et al.) 04.06.2002, **·column 3, line 6-column4, line 42** | 1-20 |
| A | P. MEDEL y col. "Efecto de la inclusión de cuatro fuentes de grasa (manteca, aceite de palma, grasa técnica de palma y jabón cálcico de palma) sobre la productividad y la calidad de la canal de pollos broiler". XXXVIII Symposium Científico de Avicultura **[in lines]** 2001 [ **recuperated from** 24-11-2005]. **recuperated from internet** <URL: http://www.wpsa-aeca.com/img/informacion/ 20_20_31_fuentesgrasas.pdf | 1-20 |

☐ Further documents are listed in the continuation of Box C.    ☒ I See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| **12 December 2005 (12.12.2005)** | **26 December 2005 (26.12.2005)** |

| Name and mailing address of the ISA/ **S.P.T.O.** | Authorized officer |
|---|---|
| Facsimile No. | Telephone No. |

Form PCT/ISA/210 (second sheet) (July 1992)

27

**INTERNATIONAL SEARCH REPORT**

Information on patent family members

| International Application No |
| --- |
| PCT/ ES 2005/070131 |

| Patent document cited in search report | Publication date | Patent familiy member(s) | Publication date |
| --- | --- | --- | --- |
| US 4153735 A | 08.05.1979 | PT 68118 A | 01.06.1978 |
| | | BE 866813 A | 01.09.1978 |
| | | ZA 7801523 A | 28.03.1979 |
| | | IE 46445 B | 15.06.1983 |
| | | IE 780578 L | 01.05.1979 |
| | | FI 780996 A | 02.05.1979 |
| | | DK 485878 A | 02.05.1979 |
| | | SE 7803800 A | 02.05.1979 |
| | | NL 7810068 A | 03.05.1979 |
| | | NO 781048 A | 03.05.1979 |
| | | DE 2813117 A | 03.05.1979 |
| | | FR 2406958 A | 25.05.1979 |
| | | JP 54066277 A | 28.05.1979 |
| | | BR 7807122 A | 10.07.1979 |
| | | AU 3475978 A | 11.10.1979 |
| | | NZ 186701 A | 11.12.1979 |
| | | CA 1093891 A | 20.01.1981 |
| | | PH 14510 A | 21.08.1981 |
| | | AU 517750 B | 27.08.1981 |
| | | GB 1603582 A | 25.11.1981 |
| | | MX 6227 E | 26.12.1984 |
| | | IT 1102475 B | 07.10.1985 |
| GB 2349155A | 25.10.2000 | NONE | |
| EP 0163395 A | 04.12.1985 | GB 2157147 A | 23.10.1985 |
| | | DE 3566862 D | 26.01.1989 |
| | | US 4853233 A | 01.08.1989 |
| | | US 4909138 A | 20.03.1990 |
| US 6399800B | 04.06.2002 | NONE | |

Form PCT/ISA/210 (patent family annex) (July 1992)

REFERENCES CITED IN THE DESCRIPTION

**Non-patent literature cited in the description**

- Official Methods of Analysis. Association of Official Analytical Chemists, 2000
- Tablas FEDNA de composición y valor nutritivo de alimentos para la fabricación de piensos compuestos. Fundación Española para el Desarrollo de la Nutrición Animal. Universidad Politécnica, 2003
- Good Clinical Practice for the Conduct of Clinical Trials or Veterinary Medicinal Products. *International Cooperation on Harmonisation of Technical Requirements for Registration of Veterinary Medicinal Products,* June 2000, http://vich.eudra.org/pdf/2000/G!09_st7.pdf
- Nutrient Requirements of Poultry. Nutrient Requirements of Poultry. Academy Press
- Nutrient Requirements of Swine. Nutrient Requirements of Swine. Academy Press, 1998

- SAS® User's Guide: Statistics. SAS Institute. 1990
- Guidelines for the assessment of additives in feeding stuffs. *Part II: Enzymes and Micro-organisms, ht-tp://eu-ropa.eu.int/comm/food/fs/sc/scanlout68_en.pdf*
- **SOARES, M ; LÓPEZ-BOTE.** Effects of dietary lecithin and fat unsaturation on nutrient utilisation in weaned piglets. *Anim. Feed Sci. Technol.,* 2002, vol. 95, 169-177
- **VOGTMANN, H. ; PFIRTER, H.P. ; PRABUCKI, A.L.** A new method of determining metabolisability of energy and digestibility of fatty acids in broiler diets. *British Poultry Science,* 1975, vol. 16 (5), 531-534